# EUROPEAN PATENT APPLICATION

(11) **EP 3 292 799 A1**
(43) Date of publication of application: **14.03.2018**
(21) Application number: 17170235.0
(22) Date of filing: 09.05.2017
(51) Int. Cl.: A47F 5/10, A47F 9/00, A47B 87/00, F16B 12/20, A47F 5/13, A47F 10/00

(54) **MODULAR COUNTER**

(30) Priority: 10.05.2016 BE 201600094; 01.06.2016 BE 201605402
(71) Applicant: TOOGPUNT BVBA, 2550 Kontich (BE)
(72) Inventor: SCHEERS, Hubert, 2550 Kontich (BE)
(74) Representative: Ostyn, Frans

(57) **Abstract**

The present invention relates to a modular counter which is fittable and dismantlable without the use of tools, comprising two modules (A), (B) whose adjoining sides are detachably connected by means of a locking device (30), (40). This locking device comprises a hook (42) which is movably connected to one module (A), (B) and engages in a hook-engagement element (32) of the other module (A), (B), and is configured to move the hook in the engaged position from a first position, in which said sides of the two modules are at an intermediate distance apart, to a second position, in which said sides adjoin each other.

## Description

The present invention relates to a counter comprising at least two modules which are detachably connected to each other.

In this description and in the claims, the term 'counter' is not only used in its strict sense to refer to a bar for pouring and offering beverages, but also in a more general sense to refer to a display case, a shop counter or a reception desk and the like.

The present invention relates in particular to a counter which is readily and quickly fittable and dismantlable, so that it is suitable for use as a temporary structure, for example at events of a temporary nature, such as parties, receptions, trade fairs and the like.

The present invention relates more specifically to a modular counter which is composed of two or more mutually connectable modules. This makes it possible to assemble counters of greatly varying lengths and configurations using a limited number of different modules.

A number of known modular counters comprises a supporting structure which is composed of modules and to which a front panel and side panels may be attached, but has the drawback that the counter is not sufficiently stable. With other known counters, fitting and dismantling is time-consuming and cumbersome, inter alia because various tools are required for these operations.

It is a first object of the present invention to solve these drawbacks by providing a modular counter which, on the one hand, is very stable and, on the other hand, can be erected and dismantled again very quickly and without the use of tools.

This object is achieved according to the present invention by providing a counter comprising at least two modules which are detachably connected to each other, in which adjacent modules with closely adjoining sides are connected by means of one or several locking devices, wherein each locking device comprises a hook which is movably connected to the one module and is engaged in a hook-engagement element which forms part of or is connected to the other module, and wherein the locking device is configured to move the hook in the engaged position from a first position, in which said sides of the two modules are an intermediate distance apart, to a second position in which said sides adjoin each other.

Said movement of the hook may be a combination of a rotation and a translation. Preferably, it is a rectilinear movement. In particular, this movement is perpendicular to the direction of the mutually adjoining sides of the modules.

During its movement, the hook exerts a pulling power on the hook-engagement element and this causes the two modules to be pulled towards each other. In this way, the locking device ensures that the adjoining sides of the modules are pulled against each other. This results in a large degree of stability of the combination. In this case, the end position of the hook (said second position) may be such that the adjoining sides of the modules are pulled against each other with a certain force, so that the modules are connected to each other to form a very stable combination. This force may be relatively large for certain locking devices. Such a counter is very stable.

In addition, the locking device may be configured with a hand-actuable operating mechanism. This mechanism may comprise, for example, a lever arm by means of which the hook can be moved by hand in the engaged position. Such a locking device may also be, for example, a so-called draw latch which can be operated without tools in a very simple manner. The used draw latch may comprise an operating mechanism with a rotatable component which can be rotated by hand by means of a lever arm or an operating arm.

In a preferred embodiment of this modular counter, the hook is movable by rotating a rotation body about a rotation axis. Preferably, this rotation axis is virtually perpendicular to the plane in which the hook is movable. The hook may be moved, for example, by the fact that this rotation body is connected to a lug which determines the position of the hook.

In a particular embodiment, the locking device is configured first to cause an engagement movement of the hook by rotating the rotation body, in which the hook is rotated from a non-engaged position to an engaged position, and then to cause said movement from the first position to the second position. Such a locking device makes fitting of the counter even easier. In order to couple the modules to form a stable combination, it suffices to position the respective sides of the modules to be coupled opposite each other, so that each hook is situated opposite a hook-engagement element, and then to activate the operating mechanism of the locking device.

In a particular embodiment, said rotation body is connected to an operating arm in order to effect said rotation of the rotation body manually and without the use of tools. This facilitates rotation and makes it possible to develop greater torque.

In a very user-friendly embodiment, the operating arm is connected to the rotation body via a ratchet mechanism, so that said rotation can be produced by a reciprocating rotation movement of the operating arm.

Preferably, the operating arm is provided with a ratchet mechanism which is reversible. With a ratchet mechanism which is reversible by changing the position of an operating element, such as by pushing in a button, a contact element is preferably provided in the vicinity of the locking device, so that the position of the operating element can be changed by knocking the operating element against the contact element during the reciprocating rotation movement of the operating arm.

Preferably, the locking device is also configured to move the hook from the second position to the first position. As a result thereof, dismantling of the counter is also very easily and quickly achieved without the use of tools.

In a most preferred embodiment, each module comprises at least one hook on a first side and at least one hook-engagement element on the opposite second side, so that the first side of each module is connectable to the second side of a first other module, and the second side is connectable to the first side of a second other module. Thus, all modules may be configured as virtually identical and mutually connectable components of the support structure of the counter.

Another drawback of certain known counters is the fact that the individual modules take up a relatively large volume, so that moving and transporting them is difficult and requires a vehicle with a relatively large load volume.

According to the present invention, this problem is likewise solved by the fact that each module comprises a first support and at least one second support which is hingeably connected to the first support, wherein the first support and each second support are accommodated in the supporting structure so as to form an angle, wherein the first support comprises a hollow edge portion, and wherein the second support comprises a hinge body which extends substantially in line with the second support and is rotatably accommodated in said hollow edge portion of the first support.

Such a hinge connection makes it possible to rotate the first and second support(s) which form an angle in the supporting structure and, for example, form an intermediate angle of 90°, in the dismantled position with respect to each other to a position in which they extend in the same direction while abutting each other or, in other words, in which the intermediate angle is 0°. As a result thereof, each module can be folded up completely in the dismantled position to form a compact plane. As a result thereof, each module is easy to handle and transport and the components of a relatively large counter can be transported in a relatively small loading space.

Preferably, each module of the counter according to the present invention comprises a first support which is configured to support one or several front panels and at least one second support which is accommodated in the supporting structure so as to form an angle with respect to the first support, and each second support has an adjustable length.

Thus, in the dismantled position, the length of the second supports may be reduced, for example in order to prevent two second supports which are hingeably connected to the first support on opposite sides of said first support from overlapping each other in the folded-up position. The adjustable length of the second supports also makes it possible to adjust the width of the modules.

This is achieved, for example, by the fact that each second support comprises a fixed section which is connected to the first support and a second section which is displaceable with respect to this fixed section, and by the fact that each second support comprises detaining means in order to detain the fixed section and the displaceable section in at least two different mutual positions.

In a highly preferred embodiment, each module comprises a first support which is hingeably connected to a second support on both opposite sides. In the supporting structure, the second supports preferably form an angle of approximately 90° with respect to the first support, so that a substantially U-shaped structure is formed. Each first and/or each second support is preferably constructed as a frame-like unit. The first and second support may be of the same height. Preferably, the first support is higher than the second support(s).

Yet another drawback of certain known modular counters is their lack of stability. In order to address this problem, the modules of the counter according to the present invention preferably also comprise at least one length-adjustable leg. This makes it possible to arrange the counter in a stable manner, even on a floor which is uneven and comprises differences in level.

In a particular embodiment of a module comprising a first support which is connected to at least one second support which is accommodated in the supporting structure so as to form an angle, each second support comprises a length-adjustable leg at a location remote from the first support.

Each length-adjustable leg is preferably designed to have a fixed section and a section which is displaceable with respect to this fixed section along the length direction of the leg, in which each leg also comprises detaining means in order to detain the fixed section and the displaceable section in one of at least two different mutual positions as desired, in which each position corresponds to a different leg length, and in which each leg also comprises a section which extends along the longitudinal direction of the leg and is threaded, and a screw section engaging with the screw thread, so that the leg length is also adjustable by rotating the threaded section.

As a result thereof, the leg length can be adjusted quickly and accurately. In a first adjusting phase, the leg length is adjusted by moving the displaceable section to a position which is as close as possible to the required leg length. Then, the leg length can be adjusted very accurately, in a second adjusting phase and by rotating the threaded section, to the length which is required to provide an additional support. Thus, each module can quickly be arranged on a floor in a very stable position, even if this floor is uneven and has differences in level.

In a most preferred embodiment, each module is supported by a floor element which is configured to be arranged on a floor. The floor element is preferably plate-like and may be provided with legs. If the floor element comprises wheels, the entire module can be moved very easily.

Preferably, each module is substantially made of metal, preferably a light metal, such as for example aluminium.

In order to illustrate the invention and to indicate further features and advantages thereof, a more detailed description of a preferred embodiment of the counter according to the present invention will now be given. It will be clear that this is only one of the many embodiments which are possible within the scope of protection of the patent which is defined by the attached claims, and that nothing in the following description can be seen as a limitation of this scope.

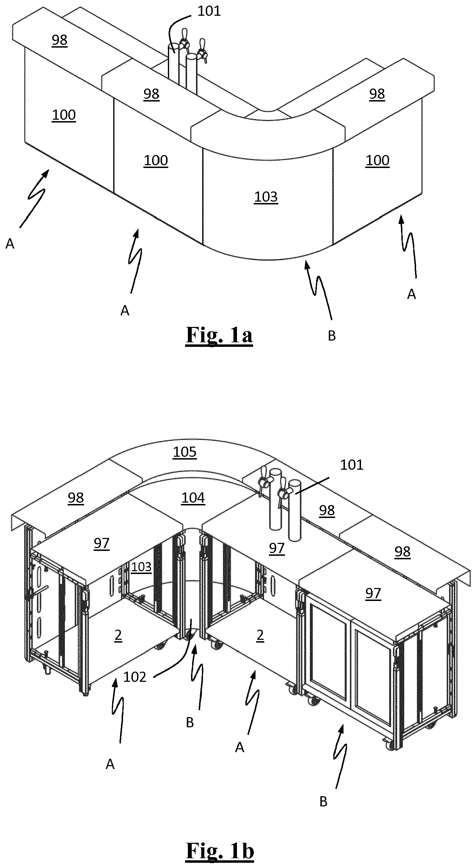

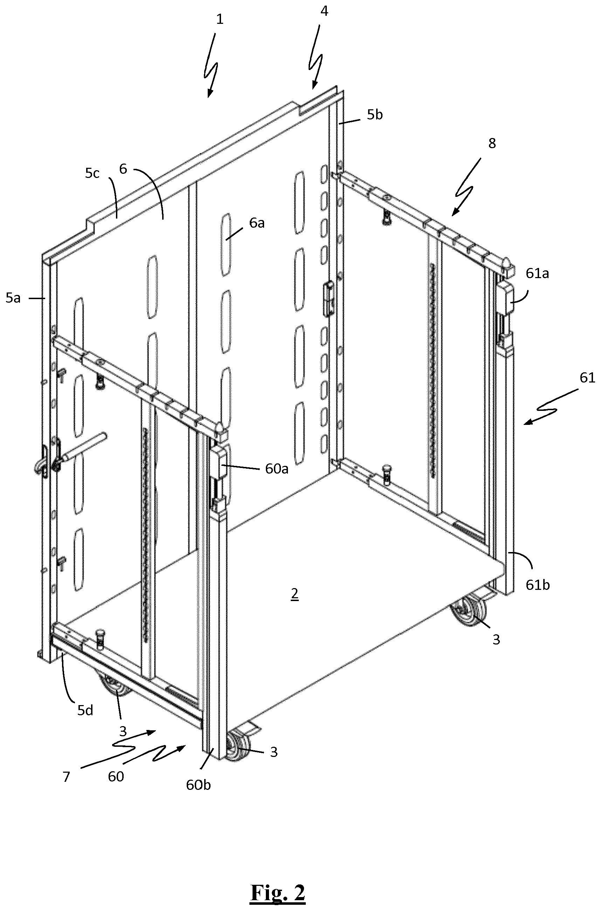

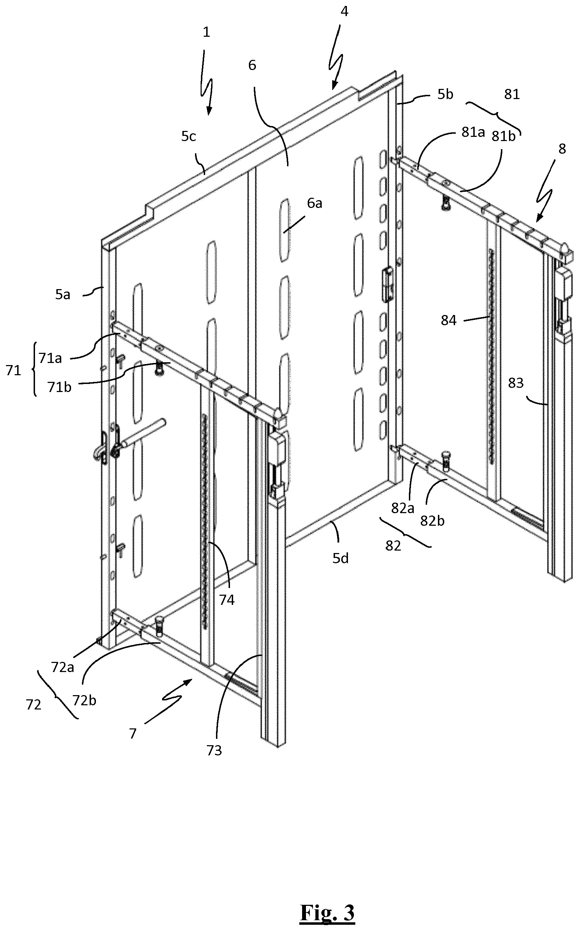

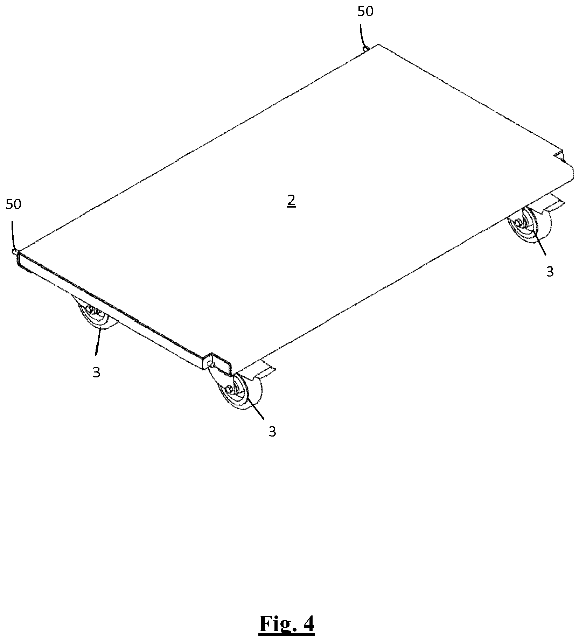

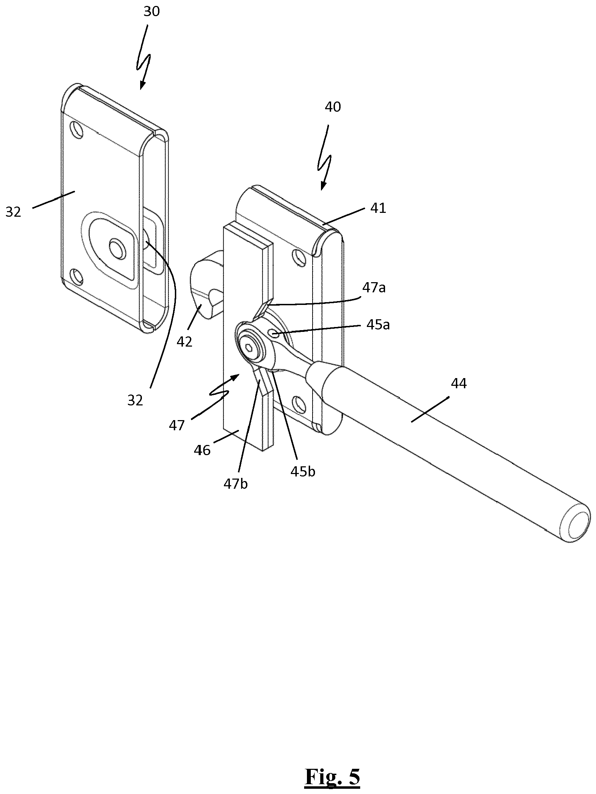

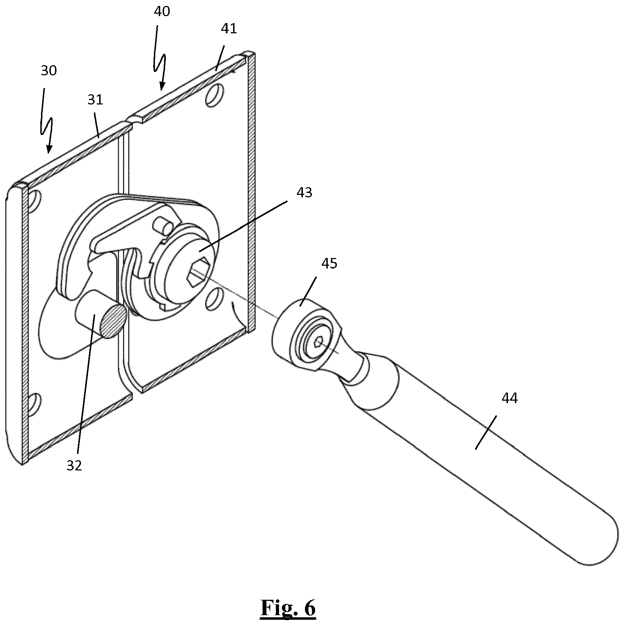

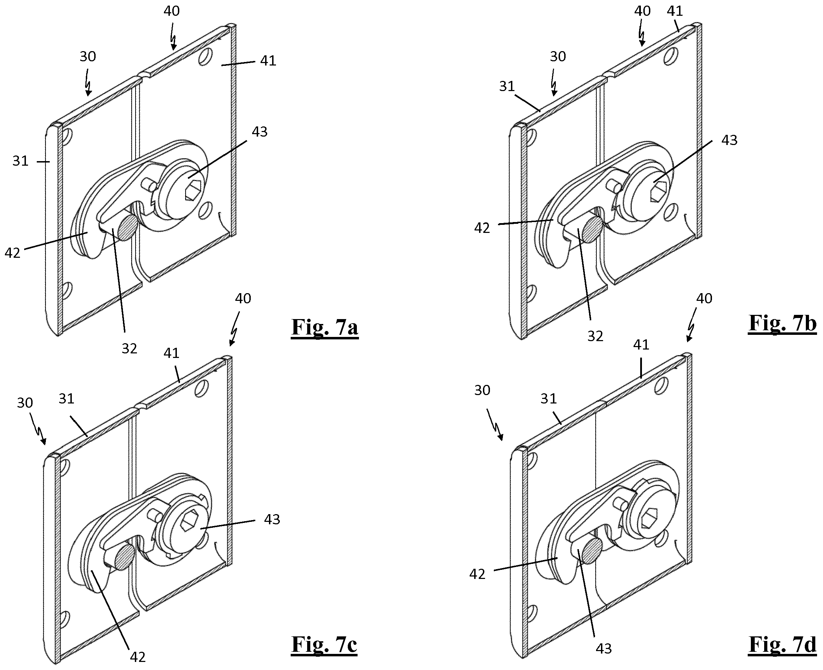

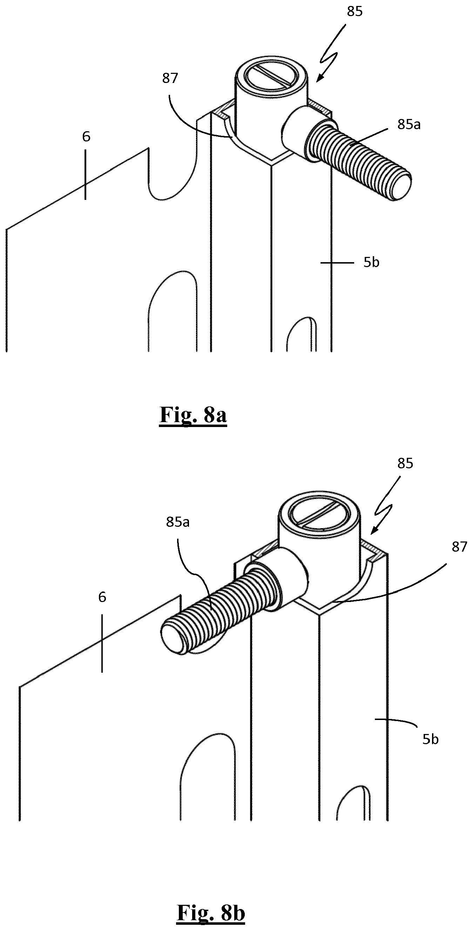

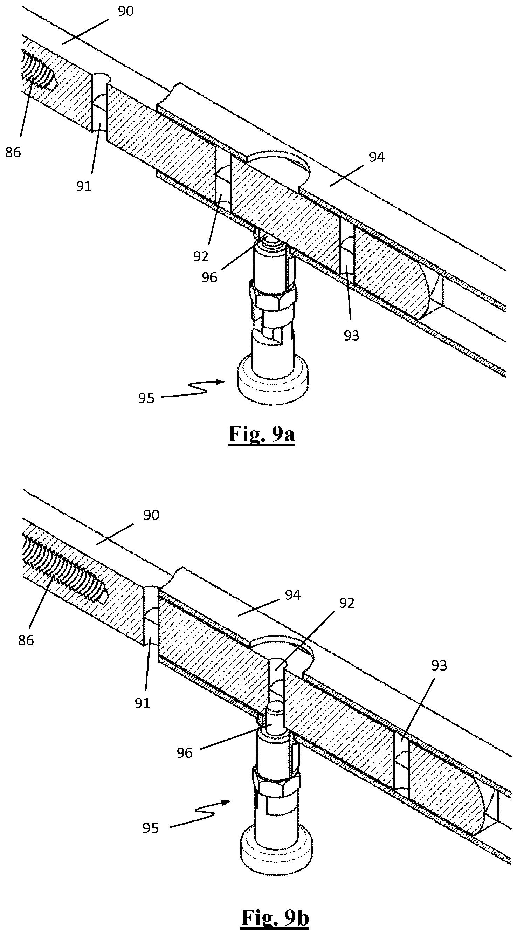

Reference numerals are used in this description to refer to the attached drawings, in which:
▪ Figs. 1 a and 1b show perspective views of a modular counter according to the present invention, seen from the front side and from the rear side of the counter, respectively,
▪ Fig. 2 shows an individual counter module of the counter illustrated in Figs. 1a and 1b,
▪ Fig. 3 shows an individual counter module of the counter illustrated in Figs. 1a and 1b, without the floor element on wheels,
▪ Fig. 4 separately shows the floor element on wheels of the counter module from Fig. 2,
▪ Fig. 5 shows a perspective view of a locking device of the counter,
▪ Fig. 6 shows the components of the locking device from Fig. 5 which are situated inside the housing,
▪ Figs. 7a to 7d show the components of the locking device from Fig. 5 which are situated inside the housing, in four successive positions while the connection is being made,
▪ Figs. 8a and 8b show perspective views of a first support of the counter module from Fig. 2 with a horizontally cut hollow edge portion in which a hinge body is accommodated, and in which the drawings show the position of the hinge body, in a fitted module and in a dismantled and folded-up module, respectively, and
▪ Figs. 9a and 9b show a perspective view of a vertical cross section of a horizontal arm of a second support from the counter module from Fig. 2, in a different mutual position from the fixed section and the displaceable section of this arm, respectively.

The modular counter illustrated in Figs. 1a and 1b has an angle-forming configuration, composed of three rectangular modules (A) and a corner module (B), as can most clearly be seen in Fig. 1b.

Each rectangular module (A) comprises a U-shaped supporting structure (1), as can most clearly be seen in Figs. 1 and 1. This supporting structure consists of a vertical front panel (4) with two vertical edge profiles (5a), (5b) to which respective wings (7), (8) are hingeably attached.

More particularly, the front panel (4) consists of a rectangular frame formed by four straight edge profiles (5a, 5b, 5c, 5d) and a plate (6) with elongate openings (6a) which extends within said frame. The front panel (4) extends along the full length of the long side of the base plate (2) and extends vertically upwards. In this case, the horizontal bottom edge of the front panel (4) is situated at a lower level than the base plate (2).

The two vertical edge profiles (5a), (5b) of the front panel (4) are hollow and have a substantially rectangular cross section, as can be seen in Figs. 8a and 8b. A wing (7), (8) is hingeably attached to each vertical edge profile (5a), (5b), respectively (see Fig. 3). Each wing (7), (8) consists of two horizontal arms (71), (72); (81), (82) with a fixed section (71a), (72a); (81a), (82a) and a displaceable section (71b), (72b); (81b), (82b), respectively, which is displaceable with respect to the fixed section so that these arms (71), (72); (81), (82) have an adjustable length (see also Figs. 9a and 9b). The horizontal arms of each wing (7), (8) are connected to each other at their ends by a first vertical arm (73); (83). A second vertical arm (74); (84) connects the horizontal arms of each wing (7), (8) even at a location which is situated closer to the front panel (4).

A length-adjustable leg (60), (61) is attached to each wing (7), (8) along the first vertical arm (73); (83) as well. As is illustrated in Fig. 2, each leg (60), (61) comprises a fixed section (60a), (61a) and a section (60b), (61b) which is displaceable with respect to that fixed section, as well as means to fix the displaceable section in a number of different positions with respect to the fixed section. Each position corresponds to a different leg length.

The horizontal arms (71), (72); (81), (82) are hingeably connected to the hollow edge profiles (5a), (5b) of the front panel (4). In this case, the top horizontal arms are situated at a lower level than the top edge of the front panel (4). The bottom horizontal arms are situated at a slightly higher level than the base plate (2). A cylindrical hinge body (85) is incorporated (Figs. 8a and 8b) in the hollow edge profiles (5a), (5b) for each arm in order to ensure the hinge action. Each hinge body (85) is provide with a threaded shaft (85a) which extends outside the edge profile by means of a respective recess (87) in the wall of the hollow edge profile. This shaft (85a) is screwed into a threaded bore (86) which is provided in a slat (90) of the fixed section (71a), (72a); (81a), (82a) of each horizontal arm. This bore (86) extends along the longitudinal direction of the arm. The shaft (85a) screwed into the bore thus also extends in line with the arm.

The recess (87) in the wall of the hollow edge profiles (5a), (5b) is such that the hinge body (85) can rotate between a position in which the shaft (85a) extends through the recess (87) at right angles to the plane of the plate (6) of the front panel (4) (as illustrated in Fig. 8a) and a position in which the shaft (85a) extends through the recess (87) parallel to the plane of this plate (6) (as is illustrated in Fig. 8b).

As a result thereof, the wings (7), (8) can rotate with respect to the edge profiles (5a), (5b) of the front panel, between a position of use in which the wings (7), (8) form a right angle with respect to the front panel (5) - this is the position of the supporting structure in the fitted position - and a folded-up position (not shown in the figures) in which the horizontal arms run parallel to the surface the surface of the plate (6) of the front panel (5).

As mentioned before, the horizontal arms (71), (72); (81), (82) of the wings (7), (8) comprise a fixed section (71a), (72a); (81a), (82a) and a displaceable section (71b), (72b); (81b), (82b) which is displaceable with respect to the fixed section so that these arms (71), (72); (81), (82) have an adjustable length (see Figs. 9a and 9b). As mentioned before, the fixed arm section (71a), (72a); (81a), (82a) comprises a slat (90). Three bores (91), (92), (93) are provided in the underside of the slat (90) at identical intermediate distances. The displaceable section of each arm comprises a hollow profile (94) in which the slat (90) is accommodated, so that the hollow profile (94) is displaceable over the slat (90) along the longitudinal direction of the arm.

On the outer side of the hollow profile (94), there is an adjustment device (95) with a pin (96) which is situated opposite an opening in the wall of the hollow profile (94) and is movable along its longitudinal direction between a blocking position in which the pin (96) extends into the hollow space of the hollow profile via the opening and a more retracted position. The pin (96) may be moved, for example, by means of a manually operable screw mechanism or push mechanism without the use of tools and may be held in the blocking position or in the retracted position, as desired.

If the hollow profile (94) is positioned in such a way with respect to the slat (90) that a specific bore (91), (92), (93) of the slat (90) is situated opposite the pin (96), the pin (96) moved into the blocking position will extend into this bore via said opening, as a result of which the slat (90) and the hollow profile (94) are detained in their mutual position. In the retracted position, the pin (96) does not extend into this bore, so that the hollow profile (94) can be displaced freely over the slat (96).

The lengths of the two horizontal arms of a wing (7), (8) can be changed together by moving the pins (96) of these two arms into the retracted position, by subsequently moving the hollow profile of each arm simultaneously in the same direction with respect to the slat (90) until a respective other bore is situated opposite the pin (96), and by finally returning the pins (96) to the blocking position.

The above-described U-shaped supporting structure is placed on a rectangular base plate (2) (see Figs. 2 and 4), and held in place by means of horizontal projections (50) on the edges of the base plate (2) and corresponding recesses in the components of the supporting structure.

De base plate is supported by four wheels (3). Each wheel (3) can be blocked by means of a respective brake system.

A worktop (97) having a substantially rectangular shape is fitted on the upper sides of the horizontal arms of each module (A). On the top edge of the front panel (4), countertop (98) is attached which is in a higher position. A rectangular wall panel (100) is attached to the front panel (4) of each rectangular module (A).

The corner module (B) differs from the rectangular modules (A) in that the base plate (102), the wall panel (103) attached thereto, the worktop (104) and the countertop (105) have a different shape, as can be seen in Fig. 1b. The shape of the worktop resembles the shape of a sector of a circle with a central angle of 90°, in which the two straight sides extend towards each other from a circular front side at right angles to each other. Here, the wings of the corner module (B) do not run parallel as they do with the rectangular modules, but follow the straight sides of the base plate (102) which extend towards each other. The wall panel (103) is curved, so that its edges adjoin the wall panels (100) of the adjacent rectangular modules (100).

The adjacent modules (A), (B) are connected to each other by means of a respective draw latch (30). Each draw latch comprises two parts, i.e. a first latch part (30) and a second latch part (40), which are connected to a respective module (A), (B). Each latch part (30), (40) is accommodated in a respective surrounding housing (31), (41) with an open side (see Fig. 5). The latching parts (30), (40) are fastened to the modules in such a way that the open sides of their respective housings (31), (41) face each other. In Figs. 6 and 7a to 7d, the latching parts (30), (40) are shown separately. In these figures, the front sides of the housings (31), (41) have been removed.

The first latch part (30) comprises a rod-shaped element (32) which extends horizontally between the walls of the housing (31). The second latch part (40) comprises a hook (42) which projects through the open side of the housing. By rotating a rotation body (43) counterclockwise, this hook (42) is rotated first from a non-engaged position (the position shown in Fig. 6) to an engaged position (the position shown in Fig. 7a). As a result of this movement, the hook (42) engages with the rod-shaped element (32) of the first latch part (31) which is situated opposite the second latch part.

If the rotation body (43) is rotated further in a counterclockwise direction, the hook (42) is gradually moved away from the rod-shaped element (32) (see Figs. 7b to 7d). As a result thereof, the two latching parts (30), (40) are moved towards each other until they adjoin each other (as shown in Fig. 7d). When the latching parts (30), (40) are connected to respective modules, the modules are pulled towards each other until they adjoin each other as a result thereof.

The rotation of the rotation body (43) is achieved by means of an operating arm (44) which engages the rotation body (43) and which is provided with a reversible ratchet mechanism which is provided in a head (45) connected to the operating arm (44). The operation of the ratchet mechanism is reversible by means of a button (45a) which can be pushed in at the top of the head (45) and a button (45b) which can be pushed in on the bottom of the head (45). After the button (45a) at the top has been pushed in, the ratchet mechanism is set to rotate the rotation body (43) in a counterclockwise direction. By pushing in the button (45b) at the bottom, the ratchet mechanism is set to rotate the rotation body (43) in a clockwise direction.

A contact element (46) comprises a V-shaped recess (47) with a top flank (47a) and a bottom flank (47b) and is arranged such that the top button (45a) can be pushed in by performing an upward rotation of the operating arm, in which case the top button (45a) strikes against the top flank (47a) of the contact element (46), and that the bottom button (45b) can be pushed in by performing a downward rotation of the operating arm, in which case the bottom button (45b) strikes against the bottom flank (47b) of the contact element (46).

In order for the rotation body (43) to rotate in a counterclockwise direction, the top button (45a) has to be pushed in. This is achieved by first rotating the operating arm upwards until the top button (45a) strikes against the top flank (47a). It is also possible to take the operating arm into this top position during the further reciprocating rotation movements in order to ensure that the top button is pushed in in each case.

In order for the rotation body (43) to rotate in a clockwise direction, the bottom button (45b) has to be pushed in. This is achieved by first rotating the operating arm downwards until the bottom button (45b) strikes against the bottom flank (47b). It is also possible to take the operating arm into this bottom position during the further reciprocating rotation movements in order to ensure that the bottom button (45b) is pushed in in each case.

The top arms of the supporting structures (1) are provided with a number of grooves (see Figs. 2 and 3), in each case in exactly the same locations. In order to ensure that the connected supporting structures are situated perfectly next to each other at the wings, it is possible to ensure for one or several grooves of an arm of a supporting structure that it perfectly corresponds to the corresponding groove in the arm of the adjacent supporting structure. In this way, one or several pairs of corresponding grooves of adjacent supporting structures are formed. By inserting an elongate element into the corresponding grooves of a pair which extends through both grooves of the pair (not shown in the figures), these positions can be fixed. The elongate element may be a screw or a bolt. Preferably, this procedure is performed in two pairs of corresponding grooves.

In this way, a perfect supporting surface for a worktop (97) of the counter is produced.

One or several vertical wall-forming panels (100), (103) are attached to the front panel (4) of the supporting structure (1) in order to give the counter an aesthetically finished front side. These panels may be made from any material, such as metal, wood, plastic or glass, or from any combination of materials. One uninterrupted wall-forming panel or several adjoining panels may be provided on the front side of the counter. These panels may be attached by means of wing nuts. Magnets or click-fit connections may also be provided for this purpose.

The counter is also provided with the required side panels and installations, such as for example a beer tap (101), a sink or a refrigerator. The counter may also be provided, for example, with a lighting installation, optionally incorporated into the modules (A), (B).

## Claims

1. Modular counter comprising at least two modules (A), (B) which are detachably connected to each other, **characterized in that** adjacent modules with closely adjoining sides are connected by means of one or several locking devices (30), (40), that each locking device comprises a hook (42) which is movably connected to the one module (A), (B) and is engaged in a hook-engagement element (32) which forms part of or is connected to the other module (A), (B), and that the locking device (30), (40) is configured to move the hook in the engaged position from a first position, in which said sides of the two modules are an intermediate distance apart, to a second position in which said sides adjoin each other.

2. Modular counter according to Claim 1, **characterized in that** the hook (42) is movable by rotating a rotation body (43).

3. Modular counter according to Claim 2, **characterized in that** the rotation body (43) is rotatable about a rotation axis which is virtually perpendicular to the plane in which the hook (42) is movable.

4. Modular counter according to Claim 2 or 3, **characterized in that** the rotation body (43) is connected to a lug which determines the position of the hook (42).

5. Modular counter according to any of Claims 2 to 4, **characterized in that** the locking device (30), (40) is configured first to cause an engagement movement of the hook (42) by rotating the rotation body (43), in which the hook (42) is rotated from a non-engaged position to an engaged position, and then to cause said movement from the first position to the second position.

6. Modular counter according to any of Claims 2 to 5, **characterized in that** said rotation body (43) is connected to an operating arm (44) in order to effect said rotation of the rotation body manually and without the use of tools.

7. Modular counter according to Claim 6, **characterized in that** the operating arm (44) is connected to the rotation body (43) via a ratchet mechanism, so that said rotation can be produced by a reciprocating rotation movement of the operating arm (44).

8. Modular counter according to any of the preceding claims, **characterized in that** the locking device (30), (40) is also configured to move the hook from the second position to the first position.

9. Modular counter according to any of the preceding claims, **characterized in that** each module (A), (B) comprises at least one hook (42) on a first side and at least one hook-engagement element (32) on the opposite second side, so that the first side of each module is connectable to the second side of a first other module, and the second side is connectable to the first side of a second other module.

10. Modular counter according to any of the preceding claims, **characterized in that** each module comprises a first support (4) and at least one second support (7), (8) which is hingeably connected to the first support, that the first support and each second support are accommodated in a supporting structure so as to form an angle, that the first support (4) comprises a hollow edge portion (5a), (5b), and that the second support (7), (8) comprises a hinge body (85) which extends substantially in line with the second support (7), (8) and is rotatably accommodated in said hollow edge portion (5a), (5b) of the first support (4).

11. Modular counter according to any of the preceding claims, **characterized in that** each module (A), (B) comprises a first support (4) and comprises at least one second support (7), (8) which is accommodated in the counter so as to form an angle with respect to the first support (4), and that each second support has an adjustable length.

12. Modular counter according to Claim 11, **characterized in that** each second support (7), (8) comprises a fixed section (71a), (72a), (81a), (82a) which is connected to the first support (4) and a second section (71b), (72b), (81b), (82b) which is displaceable with respect to this fixed section, and that each second support (7), (8) comprises detaining means (96) in order to detain the fixed section and the displaceable section in at least two different mutual positions.

13. Modular counter according to any of Claims 10 to 12, **characterized in that** each module (A), (B) comprises a first support (4) which is hingeably connected to a second support (7), (8) on both opposite sides.

14. Modular counter according to any of Claims 10 to 13, **characterized in that** each first and/or each second support is configured as a frame-like unit.

15. Modular counter according to any of the preceding claims, **characterized in that** each module comprises at least one length-adjustable leg (60), (61).

16. Modular counter according to any of Claims 10 to 15, **characterized in that** each second support (7), (8) comprises a length-adjustable leg at a location remote from the first support.

17. Modular counter according to Claim 15 or 16, **characterized in that** each leg comprises a fixed section (60a), (61a) and a section (60b), (61b) which is displaceable with respect to this fixed section along the length direction of the leg, that each leg also comprises detaining means in order to detain the fixed section and the displaceable section in one of at least two different mutual positions as desired, in which each position corresponds to a different leg length, and that each leg comprises a section which extends along the longitudinal direction of the leg and is threaded, and a screw section engaging with the screw thread, so that the leg length is also adjustable by rotating the threaded section.

18. Modular counter according to any of the preceding claims, **characterized in that** each module is supported by a common support (2), (102) which is configured to be placed on a floor in a stable manner.

19. Modular counter according to Claim 18, **characterized in that** the common support (2), (102) is supported by wheels (3).
